# EUROPEAN PATENT SPECIFICATION

(11) **EP 3 711 947 B1**
(45) Date of publication and mention of the grant of the patent: **29.09.2021**
(21) Application number: 20164078.6
(22) Date of filing: 19.03.2020
(51) Int. Cl.: B32B 27/32, C08G 18/69, C08G 18/76, C08G 18/10, C08G 18/28, C08G 18/42, C09J 175/06, C09J 201/10, C08L 23/26

(54) **REACTIVE HOT-MELT ADHESIVE HAVING GOOD ADHESION TO BOTH POLAR AND NON-POLAR SUBSTRATES**
REAKTIVER SCHMELZKLEBSTOFF MIT GUTER HAFTUNG AUF SOWOHL POLAREN ALS AUCH NICHTPOLAREN SUBSTRATEN
ADHÉSIF THERMOFUSIBLE RÉACTIF PRÉSENTANT UNE BONNE ADHÉRENCE AUX SUBSTRATS POLAIRES ET NON POLAIRES

(30) Priority: 22.03.2019 EP 19164505
(43) Date of publication of application: 23.09.2020
(73) Proprietor: SIKA TECHNOLOGY AG, 6340 Baar (CH)
(72) Inventor: SCHMIDER, Martin, Lüneburg Lüneburg (DE); DÖPPEL, Christina, 20459 Hamburg (DE)
(74) Representative: Sika Patent Attorneys

(56) References cited:
- EP-A1- 2 336 261

## Description

### Technical field

The invention relates to reactive hot-melt adhesives having good bonding on both polar and non-polar substrates and to use of such adhesive compositions as an assembly adhesive, a laminating adhesive, or as an adhesive for the building of sandwich elements, particularly in automotive industry.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the cured polymer matrix the reactive hot-melts do not soften upon heating and these adhesives are, therefore, suitable for use also at elevated temperatures. The chemical curing of the polymers can be initiated, for example, by heating or exposing the composition to water. Moisture curing hot-melt adhesives typically contain polymers functionalized with isocyanate or silane groups, which enable the crosslinking of the polymer chains upon contact with water, particularly with atmospheric moisture.

Typical reactive hot-melt adhesives used in the automotive industry as assembly adhesives include moisture curing polyurethane- and polyolefin- based hot melt adhesives. Moisture curing polyurethane hot-melt (PUR-RHM) adhesives consist mainly of isocyanate-terminated polyurethane prepolymers, which have been obtained by reacting suitable polyols, typically diols, with a stoichiometric excess of polyisocyanates, typically diisocyanates. When contacted with water the residual isocyanate groups of the polyurethane prepolymers form carbamic acid, which is unstable and decomposes into an amine and carbon dioxide. The amine reacts rapidly with other isocyanate groups to form urea linkages. State-of-the-Art PUR-RHM adhesives typically have the disadvantage of having a poor adhesion on non-polar substrates such as polypropylene, polyethylene, and polystyrene. In case these adhesives are used for bonding of non-polar substrates these have to be treated with a primer, which significantly increases the application costs.

Reactive and non-reactive polyolefin hot-melt adhesives, especially the ones based on amorphous poly-α-olefins (APAO), have highly non-polar properties and are, therefore, in principle suitable for bonding non-polar substrates without pretreatment of the surfaces with a primer composition. Reactive polyolefin hot-melt adhesives (PO-RHM), such as moisture curing polyolefin hot-melt adhesives typically consist mainly of poly-α-olefins, which have been functionalized with silane groups. When contacted with water, the silane groups of the polyolefin polymers, such as methoxysilane groups, react with water to form silanols, which subsequently undergo reaction with other silanol groups to form covalent bonds between individual polymer molecules as part of a condensation reaction. State-of-the-Art reactive and non-reactive polyolefin hot-melt adhesives typically have the disadvantage of having a relatively poor adhesion on polar substrates, such as PMMA, PA, PC, and ABS.

There is thus a need for an improved reactive polyolefin adhesive, which provides good adhesion on both non-polar and polar substrates, which have not been pretreated with primers.

### Summary of the invention

The object of the present invention is to provide a moisture curing adhesive composition, which overcomes or at least mitigates the disadvantages of the prior art PO-RHM adhesives as discussed above.

Particularly, it is an object of the present invention to provide a moisture curing adhesive composition, which has good bonding on both polar and non-polar substrates without the use of primer compositions.

Another objective of the present invention is to provide a moisture curing adhesive composition, which has improved mechanical properties after curing compared to the prior art moisture curing adhesives based on the use of silane-grafted poly-α-olefins
The subject of the present invention is a moisture curing hot-melt adhesive composition as defined in claim 1.

It was surprisingly found out that a moisture curing hot-melt adhesive composition comprising silane-functionalized poly-α-olefins and a reaction product obtained by reacting polyisocyanates with polyester block copolymers followed by reaction with mercaptosilanes provides good bonding on both polar and unpolar substrates. It was also surprisingly found out that substantial amounts of the reaction product based on polyester block copolymers can be mixed with non-polar poly-α-olefins to obtain a homogeneous mixture. Furthermore, it was found out that the reaction product can be used as a crosslinking agent in moisture curing polyolefin-based hot-melt adhesives resulting in improved mechanical properties of the at last partially cured adhesive.

Other aspects of the present invention are presented in other independent claims. Preferred aspects of the invention are presented in the dependent claims.

### Detailed description of the invention

The subject of the present invention is a moisture curing hot-melt adhesive composition comprising:
a) At least one at 25°C solid silane-functionalized poly-α-olefin P and
b) A reaction product **RP** obtainable by a method comprising steps of:
   A) Reacting at least one polyester block-copolymer as component b1) with at least one polyisocyanate as component b2) wherein the stoichiometric ratio of isocyanate groups to hydroxyl groups is above 1.0 to obtain a reaction mixture comprising an isocyanate-functional polyurethane pre-polymer,
   B) Adding at least one mercaptosilane of the formula (I) as component b3)

      HS-R³-Si(X)₍₃₋ₐ₎(R²)ₐ (I)

      in which R² is a linear or branched alkyl group having 1 to 10 C atoms, R³ is a linear or branched alkylene group having 1 to 10 C atoms, X is a hydrolyzable radical, and a has a value of 0, 1 or 2, preferably 0,
      to the reaction mixture obtained in step A) and carrying out reaction to give the reaction product **RP.**

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "a-olefin" designates an alkene having the molecular formula CₓH2ₓ (x corresponds to the number of carbon atoms), which features a carbon-carbon double bond at the first carbon atom (α-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure.

The term "poly-α-olefin" designates homopolymers and copolymers obtained by polymerization or oligomerization of α-olefins or multiple distinct α-olefins.

The term "monomer" designates a molecule having at least one polymerizable group. A monomeric di- or polyisocyanate contains particularly no urethane groups. Oligomers or polymer products of diisocyanate monomers such as adducts of monomeric diisocyanates are not monomeric diisocyanates. The monomeric di- or polyisocyanate has particularly an average molecular weight of not more than 1'000 g/mol, preferably not more than 500 g/mol, and more preferably not more than 400 g/mol.

The term "prepolymer" designates a polymer, which contains at least one, usually two or more, reactive group(s), for example isocyanate groups. By way of the reactive groups, the prepolymer may be chain-extended, crosslinked or cured.

The term "functionalized polymer" designates polymers which are chemically modified so as to contain a functional group on the polymer backbone. In contrast, the term "non-functionalized polymer" designates polymers which are not chemically modified so as to contain functional groups such as epoxy, silane, sulfonate, amide, or anhydride group on the polymer backbone.

The term "polyurethane polymer" designates polymers prepared by the so called diisocyanate polyaddition process. These also include those polymers which are virtually or entirely free from urethane groups. Examples of polyurethane polymers are polyether-polyurethanes, polyester-polyurethanes, polyether-polyureas, polyureas, polyester-polyureas, polyisocyanurates and polycarbodiimides.

The term "polyurethane prepolymer" designates polyurethane polymers comprising one or more unreacted isocyanate groups. The polyurethane prepolymers can be obtained by reacting excess of polyisocyanates with polyols and they are polyisocyanates themselves. The terms "isocyanate-functional polyurethane polymer" and "polyurethane prepolymer" are used interchangeably.

The term "silane" refers to a compounds, which have at least one, typically two or three, alkoxy groups or acyloxy groups directly bonded to the silicon atom by Si-O bonds and on the other hand, at least one organic radical bound directly to the silicon atom by an Si-C bond. For example, siloxane or silicones are not to be considered as silanes according to the present disclosure.

The term "silane group" refers to silicon-containing group bound to the organic radical of a silane via the Si-C bond. The silanes and/or their silane groups have the property of undergoing hydrolysis upon contact with moisture. The terms "silane group" and "alkoxysilane group" are used interchangeably. The term "silane-functional" denotes compounds containing silane groups. "Silane-functional polymers" are thus polymers containing at least one silane group.

The term "molecular weight" designates the molar mass (g/mol) of a molecule or a part of a molecule, also referred to as "moiety". The term "average molecular weight" designates the number average molecular weight (Mₙ) of an oligomeric or polymeric mixture of molecules or moieties. The number average molecular weight (Mₙ) can be determined by gel permeation chromatography (GPC) with a polystyrene standard.

The term "average OH-functionality" designates the average number of hydroxyl (OH) groups per molecule. The average OH functionality of a compound can be calculated based on the number average molecular weight (Mₙ) and the hydroxyl number. The hydroxyl number of a compound can be determined by using method as defined in DIN 53 240-2 standard.

The term "graft degree" designates the ratio of polymer groups in side chains to the polymer constituting the main chain of the grafted compound expressed as weight percentage. In the present disclosure the terms "graft degree", "grafting degree", and "degree of grafting" are used interchangeably.

The term "softening point" or "softening temperature" designates a temperature at which compound softens in a rubber-like state, or a temperature at which the crystalline portion within the compound melts. The softening point can be measured by a Ring and Ball method according to DIN EN 1238 standard.

The term "open time" designates the length of a time period during which an adhesive applied to a surface of a substrate is still able to form an adhesive bond after being contacted with another substrate.

The "amount of at least one component X" in a composition, for example "the amount of the at least one polyol PO" refers in the present document to the sum of the individual amounts of all polyols PO contained in the composition. For example, in case the at least one polyol PO is a polyester polyol and the composition comprises 20 wt.-% of at least one polyol, the sum of the amounts of all polyester polyols contained in the composition equals 20 wt.-%.

The term "room temperature" refers to a temperature of ca. 23°C.

The moisture curing hot-melt adhesive composition comprises at least one at 25°C solid silane-functionalized poly-α-olefin **P.** The term "silane-functionalized poly-α-olefin" designates in the present disclosure poly-α-olefins, which contain one or more silane groups on the polymer backbone. Such silane functionalized poly-α-olefins are known to a person skilled in the art and they can be produced, for example, by grafting unsaturated silanes, such as vinyl-trimethoxysilane, into poly-α-olefins. Preferably, the at least one at 25°C solid silane-functionalized poly-α-olefin **P** is a silane-grafted poly-α-olefin, wherein poly-α-olefin has preferably been obtained by Ziegler-Natta catalyzed polymerization or by metallocene catalyzed polymerization.

Suitable silane-grafted poly-α-olefins include silane-grafted homopolymers, copolymers, and terpolymers of monomers selected from the group consisting of ethylene, propylene, 1-butene and higher α-olefins. Particularly suitable silane-grafted poly-α-olefins include silane-grafted homopolymers of propylene, silane-grafted copolymers of propylene and ethylene, silane-grafted copolymers of propylene and 1-butene or other higher α-olefins, and silane- grafted terpolymers of ethylene, propylene, and 1-butene.

Preferably, the at least one at 25°C solid silane-functionalized poly-α-olefin **P** is present in the moisture curing hot-melt adhesive composition in an amount of at least 15 wt.-%, more preferably at least 25 wt.-%, based on the total weight of the moisture curing hot-melt adhesive composition. According to one or more embodiments, the at least one at 25°C solid silane-functionalized poly-α-olefin **P** is present in the moisture curing hot-melt adhesive composition in an amount of 25 - 95 wt.-%, preferably 35 - 90 wt.-%, more preferably 40 - 85 wt.-%, even more preferably 45 - 85 wt.-%, still more preferably 45 - 80 wt.-%, based on the total weight of the moisture curing hot-melt adhesive composition. According to one or more further embodiments, the at least one at 25°C solid silane-functionalized poly-α-olefin **P** is present in the moisture curing hot-melt adhesive composition in an amount of 45 - 95 wt.-%, preferably 55 - 90 wt.-%, more preferably 65 - 90 wt.-%, even more preferably 65 - 85 wt.-%, still more preferably 70 - 85 wt.-%, based on the total weight of the moisture curing hot-melt adhesive composition.

According to one or more embodiments, the at least one at 25°C solid silane-functionalized poly-α-olefin **P** is an amorphous silane-grafted poly-α-olefin. The term "amorphous" refers to polymers having a very low crystallinity degree as determined by differential scanning calorimetry (DSC) measurements.

According to one or more embodiments, the at least one at 25°C solid silane-functionalized poly-α-olefin **P** is an amorphous silane-grafted poly-α-olefin having a heat of fusion (Hf) as determined by DSC measurements of not more than 35 J/g, preferably not more than 30 J/g, more preferably not more than 25 J/g and/or a xylene cold soluble content (XCS) determined at 25 °C according ISO 16152-2005 standard of at least 80 wt.-%, preferably at least 90 wt.-%, more preferably at least 95 wt.-%. According to one or more embodiments, the at least one at 25°C solid silane-functionalized poly-α-olefin **P** is an amorphous silane-grafted poly-α-olefin lacking a crystalline melting point (Tₘ) as determined by DSC measurements.

According to one or more embodiments, the at least one at 25°C solid silane-functionalized poly-α-olefin **P** is selected from the group consisting of amorphous silane-grafted atactic polypropylene, amorphous silane-grafted propylene-ethylene copolymer, amorphous silane-grafted propylene-butene copolymer, amorphous silane-grafted propylene-hexene copolymer, and amorphous silane-grafted propylene-ethylene-butene terpolymer.

Preferably, the at least one at 25°C solid silane-functionalized poly-α-olefin **P** is an amorphous silane-grafted poly-α-olefin having a grafting degree of at least 0.5 wt.-%, more preferably at least 1.0 wt.-%, relative to the weight of the corresponding non-grafted poly-α-olefin.

According to one or more embodiments, the at least one at 25°C solid silane-functionalized poly-α-olefin **P** is amorphous silane-grafted poly-α-olefin having a silane grafting degree in the range of 0.5 - 10.0 wt.-%, preferably 1.0 - 8.0 wt.-%, more preferably 1.5 - 5.0 wt.-%, relative to the weight of the corresponding non-grafted poly-α-olefin, wherein the amorphous poly-α-olefin has preferably been obtained by Ziegler-Natta catalyzed polymerization or by metallocene catalyzed polymerization. Suitable silane-grafted amorphous poly-α-olefins are commercially available, for example, from Evonik Industries under the trade name of Vestoplast®.

According to one or more embodiments, the at least one at 25°C solid silane-functionalized poly-α-olefin **P** has a number average molecular weight (Mₙ) in the range of 1'500 - 100'000 g/mol, preferably 1'500 - 50'000 g/mol, more preferably 2'500 - 35'000 g/mol, more preferably 3'500 - 30'000 g/mol and/or a softening point measured by Ring and Ball method according to DIN EN 1238 in the range of 60 - 200°C, preferably 70 - 180°C, more preferably 80 - 160°C and/or a melt viscosity measured according to DIN 53019 standard at 190°C using a rotational viscometer of not more than 150'000 MPa·s, preferably not more than 125'000 MPa·s, particularly in the range of 1'000 - 100'000 MPa·s, preferably 2'500 - 75'000 MPa·s. The melt viscosity is preferably measured according to DIN 53019 standard by busing a rotational viscometer at 5 revolutions per minute using a Brookfield DV-2 Thermosel viscometer with a spindle No. 27.

According to one or more embodiments, the at least one at 25°C solid silane-functionalized poly-α-olefin **P** comprises at least one first silane-grafted poly-α-olefin **P1** having a grafting degree in the range of 0.5 - 3.5, preferably 1.0 - 3.0, relative to the weight of the corresponding non-grafted poly-α-olefin and at least one second silane-grafted poly-α-olefin **P2** having a grafting degree in the range of 3.5 - 10.0, preferably 4.0 - 8.0, relative to the weight of the corresponding non-grafted poly-α-olefin. According to one or more embodiments, the at least one first silane-grafted poly-α-olefin **P1** and the at least one second silane-grafted poly-α-olefin **P2** are amorphous silane-grafted poly-α-olefins.

According to one or more embodiments, the moisture curing hot-melt adhesive composition further comprises, in addition to the at least one at 25°C solid silane-functionalized poly-α-olefin **P,** at least one at 25°C solid thermoplastic polymer without silane groups **TP.**

The at least one at 25°C solid thermoplastic polymer without silane groups **TP** can be a homopolymer or copolymer of unsaturated monomers, selected, for example, from the group consisting of ethylene, propylene, butylene, isobutylene, isoprene, vinyl acetate and vinyl ester with C₃ to C₁₂ carboxylic acids, and (meth)acrylate. Suitable thermoplastic polymers without silane groups include, for example, ethylene-vinyl acetate copolymers (EVA), poly-α-olefins, polypropylene homopolymers, and polyethylene homopolymers. The at least one at 25°C solid thermoplastic polymer without silane groups **TP** can contain other functional groups than silane groups or be in a non-functionalized form.

Preferably, the at least one at 25°C solid thermoplastic polymer without silane groups **TP** has a softening point measured by a Ring and Ball method according to DIN EN 1238 standard of 60 to 180°C, preferably 70 - 160°C, more preferably 75 - 140°C, even more preferably and/or an average molecular weight (Mₙ) of 1'500 - 100'000 g/mol, more preferably 2'500 - 50'000 g/mol, even more preferably 5'000 - 35'000 g/mol.

Preferably, the at least one at 25°C solid thermoplastic polymer without silane groups **TP,** if used, is present is present in the moisture curing hot-melt adhesive composition in an amount of 1 - 35 wt.-%, more preferably 2.5 - 25 wt.-%, most preferably 5 - 15 wt.-%, based on the total weight of the moisture curing hot-melt adhesive composition.

According to one or more embodiments, the at least one at 25°C solid thermoplastic polymer without silane groups **TP** is an at 25°C solid non-functionalized poly-α-olefin, more preferably an at 25°C solid non-functionalized amorphous poly-α-olefin. Particularly suitable at 25°C solid non-functionalized poly-α-olefins and non-functionalized amorphous poly-α-olefins include those obtained by metallocene catalyzed polymerization.

According to one or more embodiments, the at least one at 25°C solid thermoplastic polymer without silane groups **TP** is an at 25 °C solid non-functionalized poly-α-olefin and the weight ratio of the amount of the at least one at 25°C solid silane-functionalized poly-α-olefin **P** to the amount of the at least one at 25°C solid thermoplastic polymer **TP** in the moisture curing hot-melt adhesive composition is in the range of from 1:1 to 20:1, preferably from 1.5:1 to 15:1, more preferably from 2:1 to 10:1.

The moisture curing hot-melt adhesive composition of the present invention further comprises a reaction product **RP** obtainable by using the method comprising steps A) and B). The term "reaction product" refers in the context of the present invention to any reaction products that are produced in step B), including primarily silane-modified polyurethane prepolymers, and any unreacted polyisocyanates.

The reaction product obtained by using the method comprising steps A) and B), and consequently the moisture curing hot-melt adhesive composition of the present invention exhibits a low level of residual polyisocyanates, such as diisocyanates, particularly low level of residual monomeric diisocyanates, for example monomeric MDI, such as below 1.5 wt.-%, preferably below 1.0 wt.-%, based on the total weight of the reaction product.

Preferably, the reaction product **RP** is present in the moisture curing hot-melt adhesive composition in an amount of at least 1 wt.-%, more preferably at least 5 wt.-%, based on the total weight of the moisture curing hot-melt adhesive composition. According to one or more embodiments, the reaction product **RP** is present in the moisture curing hot-melt adhesive composition in an amount of 5 - 75 wt.-%, preferably 10-65 wt.-%, more preferably 10 - 60 wt.-%, even more preferably 15 - 55 wt.-%, most preferably 20 - 50 wt.-%, based on the total weight of the moisture curing hot-melt adhesive composition. According to one or more further embodiments, the reaction product **RP** is present in the moisture curing hot-melt adhesive composition in an amount of 5 - 50 wt.-%, preferably 10 - 40 wt.-%, more preferably 10 - 35 wt.-%, most preferably 10 - 30 wt.-%, based on the total weight of the moisture curing hot-melt adhesive composition.

In step A) of the method for producing the reaction product **RP,** at least one polyester block copolymer as component b1) is reacted with at least one polyisocyanate as component b2), wherein the stoichiometric ratio of isocyanate groups to hydroxyl groups is above 1.0 to obtain a reaction mixture comprising an isocyanate-functional polyurethane pre-polymer.

Preferably, the at least one polyester block copolymer as component b1) is a polyester block copolymer of hydroxyl-, carboxyl-, or amino-terminated polymers (block B) and polyesters (block A), wherein the polyester block copolymer has ABA- triblock or AB-diblock structure.

According to one or more embodiments, the at least one polyester block copolymer as component b1) is obtained from ring opening polymerization of one or more lactones and/or lactides in the presence of at least one hydroxyl-, carboxyl-, or amino-terminated polymer. Such polyester block copolymers and a method for producing these are disclosed, for example, in published European patent application EP 3 243 863 A1.

According to one or more embodiments, the at least one polyester block copolymer as component b1) is obtained from ring opening polymerization of one or more lactones and/or lactides in the presence of at least one hydroxyl-terminated polybutadiene. Hydroxyl-terminated polybutadienes, also known as polybutadiene polyols, are obtainable by polymerization of 1,3-butadienes and allyl alcohol or by oxidation of suitable polybutadienes. The term "hydroxyl-terminated" refers to polybutadienes having primary hydroxyl groups.

It was surprisingly found out that the reaction products **RP** obtained by reacting polyiisocyanates, particularlyparticularly diisocyanates with polyester block copolymers obtained from ring opening polymerization of one or more lactones and/or lactides in the presence of at least one hydroxyl-terminated polybutadiene followed by a reaction with mercaptosilanes of formula (I), have particularly good compatibility with silane-functionalized poly-α-olefins, particularlyparticularly with silane-grafted amorphous poly-α-olefins (APAOs). Without being bound to any theory it is believed that the polybutadiene part of the polyester block copolymer acts as a compatibilizer between the reaction product **RP** and the silane-functionalized poly-α-olefins.

Particularly suitable hydroxyl-terminated polybutadienes include liquid hydroxyl-terminated polybutadienes having an average molecular weight (Mₙ) of not more than 15'000 g/mol and an average hydroxyl (OH) functionality or not more than 5.0. According to one or more embodiments, the at least one hydroxyl terminated polybutadiene is a liquid hydroxyl-terminated polybutadiene having an average molecular weight (Mₙ) in the range of 500 - 10'000 g/mol, preferably 1'000 - 7'500 g/mol, most preferably 1'500 - 5'000 g/mol and/or an average hydroxyl (OH) functionality in the range of 1.7 - 5.0, preferably 1.8 - 3.5, more preferably 1.8 - 3.0 and/or an iodine number determined according to DIN 53 241 of 100 - 1'000 g lodine/100 g, preferably 250 - 750 g lodine/100 g, more preferably 300 - 500 g lodine/100 g.

Suitable hydroxyl-terminated polybutadienes are commercially available, for example, under the trade name of Poly bd® and Krasol® (from Cray Valley), such as Krasol® LBH-P 2000, Krasol® LBH-P 3000, or Poly bd® R45V; under the trade name of Polyvest® (from Evonik Industries), such as Polyvest® HT; and under the trade name of Hypro® (from Emerald Materials), such as Hypro® 2800X95 HTB.

The at least one polyester block copolymer as component b1) may comprise, for example, 50 - 95 wt.-%, preferably 65 - 90 wt.-%, more preferably 70 - 90 wt.-%, of the total weight of the components b1) and b2), which are reacted in step A) of the method.

Preferably, the at least one polyester block copolymer has an average molecular weight (Mₙ) of not more than 75'000 g/mol and/or an average hydroxyl (OH) functionality or not more than 5.0. According to one or more embodiments, the at least one polyester block copolymer has an average molecular weight (Mₙ) in the range of 1'500 - 50'000 g/mol, preferably 2'500 - 30'000 g/mol, more preferably 2'500 - 15'000 g/mol and/or an average hydroxyl (OH) functionality in the range of 1.0 - 5.0, preferably 1.5 - 3.5, more preferably 1.6 - 3.0 and/or a hydroxyl number determined by using method as defined in DIN 53 240-2 standard in the range of 5 - 50 mg KOH/g, preferably 5 - 40 mg KOH/g, more preferably 10 - 35 mg KOH/g.

Suitable polyisocyanates to be used as component b2) include, for example, aliphatic, cyclo-aliphatic, and aromatic polyisocyanates, especially diisocyanates, particularly monomeric diisocyanates. Non-monomeric diisocyanates such as oligomeric and polymeric products of monomeric diisocyanates, for example adducts of monomeric diisocyanates are also suitable but the use of monomeric diisocyanates is preferred.

According to one or more embodiments, the at least one polyisocyanate as component b2) is a monomeric diisocyanate, preferably having an average molecular weight (Mₙ) of not more than 1'000 g/mol, preferably not more than 500 g/mol, more preferably not more than 400 g/mol.

Examples of suitable monomeric diisocyanates include, for example, 1,6-hexamethylene diisocyanate (HDI), 2-methylpentamethylene 1,5-diisocyanate, 2,2,4- and 2,4,4-trimethyl-1,6-hexamethylene diisocyanate (TMDI) and mixtures of these isomers, 1,10 decamethylene diisocyanate, 1,12-dodecamethylene diisocyanate, lysine diisocyanate, lysine ester diisocyanate, cyclohexane 1,3-diisocyanate and cyclohexane 1,4-diisocyanate and mixtures of these isomers, 1-methyl-2,4- and -2,6-diisocyanatocyclohexane and mixtures of these isomers (HTDI or H6TDI), 1-isocyanato-3,3,5-trimethyl-5-isocyanatomethylcyclohexane (= isophoronediisocyanate or IPDI), perhydro-2,4'- and -4,4'-diphenylmethane diisocyanate (HMDI or H12MDI) and mixtures of these isomers, 1,4- diisocyanato-2,2,6-trimethylcyclohexane (TMCDI), 1,3-and 1,4-bis(isocyanatomethyl)cyclohexane, m- and p-xylylene diisocyanate (m- and p-XDI) and mixtures of these isomers, m- and p-tetramethyl-1,3- and 1,4-xylylene diisocyanate (m- and p-TMXDI) and mixtures of these isomers, bis(1-isocyanato-1-methylethyl)naphthalene, 2,4- and 2,6-tolylene diisocyanate and mixtures of these isomers (TDI), 4,4'-, 2,4'- and 2,2'-diphenylmethane diisocyanate and mixtures of these isomers (MDI), 1,3- and 1,4-phenylene diisocyanate and mixtures of these isomers, 2,3,5,6-tetramethyl-1,4-diisocyanatobenzene, naphthalene 1,5-diisocyanate (NDI), 3,3'-dimethyl-4,4'-diisocyanatobiphenyl (TODI), dianisidine diisocyanate (DADI), and also mixtures thereof.

According to one or more embodiments, the monomeric diisocyanate is selected from the group consisting of 4,4'-, 2,4'-, and 2,2'-diphenylmethane diisocyanate and mixtures of these isomers (MDI), 2,4- and 2,6-tolylene diisocyanate and mixtures of these isomers (TDI), 1,6-hexamethylene diisocyanate (HDI), and 1-isocyanato-3,3,5-trimethyl-5-isocyanatomethylcyclohexane (IPDI). Furthermore, a person skilled in the art knows that the technical grade products of diisocyanates may frequently contain isomer mixtures or other isomers as impurities. According to one or more embodiments, the monomeric diisocyanate is selected from the group consisting of MDI and IPDI. Suitable monomeric diisocyanates are commercially available, for example, under the trade name of Lupranat® (from BASF) and Desmodur (from Covestro).

The at least one polyisocyanate as component b2) may comprise, for example, 5 - 35 wt.-%, preferably 5-30 wt.-%, more preferably 10 - 25 wt.-%, of the total weight of the components b1) and b2), which are reacted in step A) of the method.

The step A) of the method for producing the reaction product is conducted by reacting the at least one polyester block copolymer as component b1) with the at least one polyisocyanate as component b2), wherein the stoichiometric ratio of isocyanate groups to hydroxyl groups is above 1.0. The term stoichiometric ratio of isocyanate groups to hydroxyl groups" refers to the molar ratio of NCO-groups of NCO-group containing compounds to the OH-groups of OH-group containing compounds, i.e. the molar ratio of the NCO-groups of the at least one polyisocyanate to the OH-groups of the at least one polyester block copolymer. In case the reaction of step A) is carried out in the presence of further reactive compounds containing OH-groups or NCO-groups, these are also taken into account in calculating the stoichiometric NCO/OH ratio.

The stoichiometric ratio of NCO-groups to OH-groups in step A) is preferably not less than 1.2, more preferably not less than 1.5 and even more preferably not less than 1.8 while preferably being not greater than 2.8, more preferably not greater than 2.5, even more preferably not greater than 2.2. According to one or more embodiments, the stoichiometric ratio of NCO-groups to OH-groups in step A) is in the range of 1.3 - 2.5, preferably 1.5 - 2.2.

According to one or more embodiments, the isocyanate-functional polyurethane prepolymer contained in the reaction mixture obtained in step A) has an average isocyanate functionality of not more than 3.0. The term "average NCO-functionality" designates the average number of isocyanate (NCO) groups per molecule determined by using the method as defined in ISO 14896-2006 standard method A.

The reaction of the at least one polyester block copolymer and the at least one polyisocyanate in step A) may be carried out according conventional methods used for preparation of isocyanate-functional polyurethane prepolymers. The reaction of step A) may, for example, be carried out at temperatures in the range of 50 - 160°C, preferably 60 - 120°C, optionally in the presence of a catalyst. The reaction time depends on the temperature employed, but may, for example, be in the range of from 30 minutes to 6 hours, particularlyparticularly from 30 minutes to 3 hours, preferably from 30 minutes to 1.5 hours. Suitable catalysts used in step A) include, for example, metal catalysts, such as Coscat®83 (from Vertellus Performance Materials Inc.), and tin catalysts.

Since the reaction of the at least one polyester block copolymer with the at least one polyisocyanate is conducted in a stoichiometric excess of the polyisocyanate, the reaction mixture obtained in step A) contains unconverted polyisocyanate, preferably unconverted monomeric diisocyanate. According to one or more embodiments, the amount of unconverted polyisocyanate in the reaction mixture obtained in step A) is 1.5 - 5 wt.-%, preferably 2 - 4 wt.-%, based on the total weight of the reaction mixture. The amount of unconverted polyisocyanates present in the reaction mixture can be determined using high pressure liquid chromatography (HPLC).

In step B) of the method for producing the reaction product, at least one mercaptosilane of formula (I) is added as component b3) to the reaction mixture obtained in step A) and the reaction is carried out to give the reaction product RP. According to one or more embodiments, the at least one mercaptosilane as component b3) is added to the reaction mixture obtained in step A) in an amount of 2.5 - 35 wt.-%, preferably 5-30 wt.-%, more preferably 10 - 30 wt.-%, even more preferably 10 - 25 wt.-%, based on the total weight of components b1) to b3).

According to one or more embodiments, the at least one mercaptosilane is a mercaptosilane of the formula (I) in which X is OR⁴, R⁴ being a linear or branched alkyl group having 1 to 10 C atoms which optionally contains 1 or 2 ether oxygens, preferably a linear or branched alkyl group having 1 to 4 C atoms, more particularly methyl, ethyl or isopropyl, and/or R³ being methylene or propylene.

The reaction of step B) is carried out in a conventional manner. This means particularlyparticularly that the thiol groups of the at least one mercaptosilane react with the isocyanate groups of the reaction mixture, especially with isocyanate groups of the isocyanate-functional polyurethane prepolymer. The stoichiometric ratio of NCO-groups to HS-groups in step B) is preferably not more than 1.0, more preferably not more than 0.9. In case the reaction of step B) is carried out in the presence of further compounds containing hydroxyl groups or thiol groups other than the isocyanate-functional polyurethane prepolymer, unconverted polyisocyanate, and the at least one mercaptosilane of formula (I), these are taken into account in calculating the stoichiometric ratio of NCO-groups to HS-groups. The reaction conducted in step B) will convert substantially all the isocyanate groups of the isocyanate-functional polyurethane prepolymer, for example, at least 95% and generally at least 99% of the isocyanate groups of the isocyanate-functional polyurethane prepolymer.

The reaction of step B), i.e. the reaction of the least one mercaptosilane of formula (I) with the reaction mixture containing the isocyanate-functional polyurethane prepolymer, is preferably carried out at a temperature of at least 60°C. According to one or more embodiments, the reaction of step B) is carried out at a temperature in the range of 70 - 160°C, preferably 80 - 140°C. The reaction time, as will be appreciated, depends on the temperature employed, but may, for example, be in the range of from 1 minute to 3 hours, preferably from 5 minutes to 1.5 hours, more preferably from 5 minutes to 1 hour.

The reaction mixture obtained in step A) is usable as such for reacting in step B), i.e. without any additional workup steps. More particularly, the unconverted polyisocyanate is not separated from the reaction mixture obtained in step A) before conducting the reaction of step B). Apart from the unconverted polyisocyanate present in the reaction mixture, no additional polyisocyanate is added. The method comprising steps the A) and B) is preferably performed as a one-pot process.

The moisture curing hot-melt adhesive composition may further comprise one or more catalysts, which are used to accelerate the reaction of the silane groups with moisture. The presence of such catalysts is not mandatory but it may be preferred.

Examples of suitable catalysts include organic phosphorus and tin compounds, for example, dibutyl tin laurate (DBTL). Suitable organic phosphorus compounds include, for example, phosphoric acid esters, which can be used as mixtures of mono-, di- and triesters of phosphoric acid that are esterified with alkanols, for example, those having a chain length in the range from 12 to 24 carbon atoms. The acid number of the phosphoric acid esters can be in the range from approximately 120 to 240 mg/KOH per gram.

The catalysts are preferably present in the moisture curing hot-melt adhesive composition in an amount of 0.005 - 2.00% by weigh, more preferably 0.05 - 1.00% by weight, based on the total weigh of the moisture curing hot-melt adhesive composition.

In addition, the moisture curing hot-melt adhesive composition can contain further auxiliary substances and additives, for example, those selected from the group consisting of fillers, plasticizers, adhesion promoters, UV absorption agents, UV and heat stabilizers, optical brighteners, pigments, dyes, and desiccants. Exemplary UV stabilizers that can be included in the hot melt adhesive composition include, for example, sterically hindered phenols. However, the total amount of such additional auxiliary substances and additives is, preferably, not more than 25 wt.-%, more preferably not more than 15 wt.-% even more preferably not more than 10 wt.-%, based on the total weight of the moisture curing hot-melt adhesive composition.

Preferably, the moisture curing hot-melt adhesive composition exhibits a low content of monomeric diisocyanates, such as not more than 1.0 wt.-%, preferably not more than 0.9 wt.-%, more preferably not more than 0.8 wt.-%, based on the total weight of the moisture curing hot-melt adhesive composition.

Furthermore, the moisture curing hot-melt adhesive composition of the present invention has good workability under typical application conditions of hot-melt adhesives, particularlyparticularly at temperatures in the range of 100 - 180°C, meaning that at the application temperature the adhesive has sufficiently low viscosity to enable application to a substrate in a molten state. The adhesive composition also develops a high initial strength immediately after the application to a substrate upon cooling even before the initiation of the crosslinking reaction with water, particularlyparticularly with atmospheric moisture.

Preferably, the moisture curing hot-melt adhesive composition has a viscosity at a temperature of 170°C of not more than 100'000 mPa·s, more preferably not more than 75'000 mPa·s, most preferably not more than 50'000 mPa·s. The viscosity at temperature of 170°C can be measured using conventional viscometers at 5 revolutions per minute, for example by using a Brookfield DV-2 Thermosel viscometer with a spindle No. 27.

Preferably, the moisture curing hot-melt adhesive composition has a softening point measured by Ring and Ball method according to DIN EN 1238 in the range of 60 - 150°C, more preferably 65 - 140°C, even more preferably 70 - 130°C, most preferably 75 - 115°C.

Furthermore, the moisture curing hot-melt adhesive composition of the present invention is especially useful as a one-part storage stable moisture curing hot-melt adhesive. The term "storage-stable composition" refers in the present document to a composition which, particularlyparticularly in the absence of moisture, can be kept in a suitable package(s) or facility, such as a drum, a pouch or a cartridge, for example, for a period of several months up to one year or more, without suffering any service-relevant change in the application properties and/or reactivity of the composition.

Another subject of the present invention is a method for producing a moisture curing hot-melt adhesive composition of the present invention comprising mixing of the components a) and b) with each other.

The mixing of the components a) and b) is preferably conducted at a temperature, which is above the softening point of both components. According to one or more embodiments, the mixing of components a) and b) is conducted at a temperature in the range of 50 - 200°C, preferably 65 - 180°C, more preferably 80 - 175°C, most preferably 90 - 160°C.

Another subject of the present invention is use of the moisture curing hot-melt adhesive composition of the present invention as an assembly adhesive, a laminating adhesive, or as an adhesive for the building of sandwich elements.

Another subject of the present invention is a method for adhesively bonding a first substrate to a second substrate, the method comprising steps of:
I) Heating a moisture curing hot-melt adhesive composition according to the present invention to provide a melted adhesive composition,
II) Applying the melted adhesive composition to a surface of the first substrate to form an adhesive film,
III) Contacting the adhesive film with a surface of the second substrate, and
IV) Chemically curing the adhesive film with water, particularlyparticularly with atmospheric moisture.

The first and second substrates are preferably sheet-like articles having first and second major surfaces defining a thickness there between or three-dimensional shaped articles.

In the method for adhesively bonding a first substrate to a second substrate, the moisture curing hot-melt adhesive composition is heated to a temperature above the softening point of the adhesive composition and applied on the surface of the first substrate in molten state using any conventional technique, for example, by slot die coating, roller coating, extrusion coating, calender coating, or spray coating. The moisture curing hot-melt adhesive composition can be applied to a surface of the first substrate with a coating weight of, for example, 50 - 500 g/m², such as 55 - 350 g/m², particularly 65 - 150 g/m².

Especially in case the moisture curing hot-melt adhesive composition is applied to the surface of the first substrate as a thin film having a coating weight of, for example, less than 150 g/m², particularly less than 100 g/m², the adhesive film formed in step II) may be reactivated by heating before being contacted with the surface of the second substrate. The reactivation temperature depends on the embodiment of the adhesive composition. It may be preferable, for example, that the adhesive film is reactivated by heating to a temperature of 60 - 200°C, particularly 70 - 180°C, preferably 120 - 160°C. The heating of the adhesive film can be conducted using any conventional technique, such as heating in an oven, heating by air stream, or heating with infrared (IR)-radiation. The reactivated adhesive film is preferably contacted with the second substrate within short time after the reactivation temperature is reached, in any case within the open time of the adhesive composition.

After the adhesive film has been contacted with the surface of the second substrate, the adhesive composition develops a certain initial adhesive strength by physical curing, i.e. by cooling. Depending on the application temperature and on the embodiment of the moisture curing hot-melt adhesive composition, particularly on the reactivity of the adhesive, the chemical curing reactions may begin already during the application of the adhesive composition on the surface of the first substrate. Typically, however, major part of the chemical curing occurs after the application of adhesive, particularly, after the applied adhesive film has been contacted with the surface of the second substrate.

The first and second substrates can be composed of any conventional material including polymeric material, metal, painted metal, glass, wood, wood derived materials such as natural fiber polypropylene (NFPP), and fiber materials. Suitable polymeric materials include polyethylene (PE), particularly high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof. The first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

According to one or more embodiments, one of the first and the second substrate is composed of a polar material, wherein the other substrate is composed of a non-polar material.

According to one or more further embodiments, the first substrate, or in case the first substrate is composed of multiple layers, the layer constituting the outer exterior surface on which the adhesive composition is applied in step II), is composed of a polar material, particularly of PMMA, PA, PC, ABS, glass fiber reinforced plastic (GFRP), glass, or metal and the second substrate, or in case the second substrate is composed of multiple layers, the layer constituting the outer exterior surface which is contacted with the adhesive film in step III), is composed of a non-polar material, particularly, of polypropylene, polyethylene, or polystyrene.

According to one or more further embodiments, the first substrate, or in case the first substrate is composed of multiple layers, the layer constituting the outer exterior surface on which the adhesive composition is applied in step II), is composed of a non-polar material, particularly of polypropylene, polyethylene, or polystyrene and the second substrate, or in case the second substrate is composed of multiple layers, the layer constituting the outer exterior surface which is contacted with the adhesive film in step III), is composed of a polar material, particularly, of PMMA, PA, PC, ABS, glass fiber reinforced plastic (GFRP), glass, or metal

Another subject of the present invention is a composite element obtainable by using the method for adhesively bonding a first substrate to a second substrate of the present invention.

The composite element of the present invention can be used, for example, for producing interior lining components of automotive vehicles. Examples of such interior lining components include door panel pieces, switch panels, rear parcel shelves, head liners, sliding roofs, center consoles, glove compartments, sun visors, pillars, door handles, arm rests, flooring, cargo flooring, and trunk area flooring as well as sleeping cabins and rear panels of trucks.

Another subject of the present invention is use of the reaction product **RP** obtainable by using the method as described above as a chemical crosslinking agent in a moisture curing adhesive composition comprising 25 - 95 wt.-%, preferably 35 - 90 wt.-%, more preferably 40 - 85 wt.-%, even more preferably 45 - 85 wt.-%, still more preferably 45 - 80 wt.-%, of at least one at 25°C solid silane-functionalized poly-α-olefin **P,** based on the total weight of the moisture curing adhesive composition.

According to one or more embodiments, the at least one at 25°C solid silane-functionalized poly-α-olefin **P** is present in the moisture curing adhesive composition in an amount of 45 - 95 wt.-%, preferably 55 - 90 wt.-%, more preferably 65 - 90 wt.-%, even more preferably 65 - 85 wt.-%, still more preferably 70 - 85 wt.-%, based on the total weight of the moisture curing adhesive composition.

The term "chemical crosslinking agent" refers in the present disclosure to compounds containing functionality, which is reactive with components of polymer chains present in the adhesive composition such that on reaction covalent bonds are formed and the compound forms a bridging group between two or more polymer chains.

According to one or more embodiments, the reaction product **RP** is present in the moisture curing adhesive composition in an amount of 5 - 75 wt.-%, preferably 10 - 65 wt.-%, more preferably 10 - 60 wt.-%, even more preferably 15 - 55 wt.-%, most preferably 20 - 50 wt.-%, based on the total weight of the moisture curing adhesive composition. According to one or more further embodiments, the reaction product **RP** is present in the moisture curing adhesive composition in an amount of 5 - 50 wt.-%, preferably 10 - 40 wt.-%, more preferably 10 - 35 wt.-%, most preferably 10 - 30 wt.-%, based on the total weight of the moisture curing adhesive composition.

According to one or more embodiments, the at least one at 25°C solid silane-functionalized poly-α-olefin **P** is a silane-grafted poly-α-olefin, preferably an amorphous silane-grafted poly-α-olefin, wherein poly-α-olefin has preferably been obtained by Ziegler-Natta catalyzed polymerization or by metallocene catalyzed polymerization.

According to one or more embodiments, the moisture curing adhesive composition is a moisture curing hot-melt adhesive composition.

Still another subject of the present invention is a method for improving mechanical properties of an at least partially cured moisture curing adhesive composition, wherein a reaction product **RP** obtainable by using the method comprising steps A) and B) as described above is added to the moisture curing adhesive composition comprising 25 - 95 wt.-%, preferably 35 - 90 wt.-%, more preferably 40 - 85 wt.-%, even more preferably 45 - 85 wt.-%, still more preferably 45 - 80 wt.-%, of at least one at 25°C solid silane-functionalized poly-α-olefin, based on the total weight of the moisture curing adhesive composition.

According to one or more embodiments, the at least one at 25°C solid silane-functionalized poly-α-olefin **P** is present in the moisture curing adhesive composition into which the reaction product **RP** is added, in an amount of 45 - 95 wt.-%, preferably 55 - 90 wt.-%, more preferably 65 - 90 wt.-%, even more preferably 65 - 85 wt.-%, still more preferably 70 - 85 wt.-%, based on the total weight of the moisture curing adhesive composition.

According to one or more further embodiments, the tensile strength of the least partially cured moisture curing adhesive composition, measured by using the method as defined in DIN 53504 standard, is increased by at least 15%, preferably at least 25% compared to an otherwise identical at least partially cured moisture curing adhesive composition not containing the reaction product.

According to one or more embodiments, the reaction product **RP** is added to the moisture curing adhesive composition to comprise 5 - 75 wt.-%, preferably 10 - 65 wt.-%, more preferably 10 - 60 wt.-%, even more preferably 15 - 55 wt.-%, most preferably 20 - 50 wt.-%, of the total weight of the moisture curing adhesive composition. According to one or more further embodiments, the reaction product **RP** is added to the moisture curing adhesive composition to comprise of 5 - 50 wt.-%, preferably 10 - 40 wt.-%, more preferably 10 - 35 wt.-%, most preferably 10 - 30 wt.-%, of the total weight of the moisture curing adhesive composition.

According to one or more embodiments, the at least one at 25°C solid silane-functionalized poly-α-olefin **P** is a silane-grafted poly-α-olefin, preferably an amorphous silane-grafted poly-α-olefin.

According to one or more embodiments, the at least partially cured moisture curing adhesive composition is an at least partially cured moisture curing hot-melt adhesive composition.

### Examples

The followings compounds and products shown in Table 1 were used in the examples.

**Table 1**

| | | |
|---|---|---|
| Polyester block copolymer | Polyester block copolymer with ABA-triblock structure, A = polyester, B=polybutadiene, OH-number 20 - 35 mg KOH/g | Evonik Industries AG |
| MDI | Monomeric MDI diisocyanate, NCO-content 30 - 40 g/100 g (ASTM D 5155-96 A) | BASF Polyurethanes GmbH |
| Mercaptosilane | 3-mercaptopropyltrimethoxysilane, liquid | BRB International BV |
| Si-APAO | Silane grafted amorphous poly-α-olefin, softening point 90 - 100 °C (DIN EN 1427) | Evonik Industries AG |
| Catalyst | Phosphoric acid ester catalyst, acid number 160 - 200 mg KOH/g, melting point 60 - 80 °C | Clariant |

The adhesive compositions presented in Table 2 were prepared according to the procedures as presented below.

### Preparation of tested compositions

### Ex-1 and Ex-2

150 g of polyester block copolymer was charged into a reactor and kept under vacuum with stirring (∼80 rpm) at a temperature of 90°C for 60 minutes to dewater the contents. 26.4 g of MDI were then added into the reactor and the obtained mixture was reacted with stirring (∼80 rpm) for 60 minutes under vacuum (- 0.9 bar) at a temperature of 90°C to obtain a reaction mixture containing an isocynate-functional polyurethane prepolymer. 30 g of mercaptosilane was then added to the obtained reaction mixture and the reaction was conducted with stirring (∼80 rpm) for 135 minutes under vacuum (- 0.9 bar) at a temperature of 90°C to give a reaction product **RP.**

Finally, 15 g of the obtained reaction product **RP** was mixed with 45 g of Si-APAO and 0.1 g of catalyst and the mixture was stirred (∼80 rpm) at a temperature of 90°C for 20 minutes. The prepared moisture curing hot-melt adhesive composition was filled in tubes and stored at room temperature in the absence of moisture.

The adhesive composition of Ex-2 was prepared by mixing 30 of the reaction product **RP** obtained by using the method as described above with 30 g of Si-APAO and 0.1 g of catalyst and the mixture was stirred (∼80 rpm) at a temperature of 90°C for 20 minutes. The prepared moisture curing hot-melt adhesive composition was filled in tubes and stored at room temperature in the absence of moisture.

### Measurement methods

The adhesive compositions were characterized using the following measurement methods.

### Tensile strength at break, elongation at break, and E-modulus

The adhesive composition provided in a sealed tube was preheated in an oven to at temperature of 140°C for a time period of 20 minutes. After the heating, a sample of 40 g of the molten adhesive was applied with a doctor blade to surface of a silicone paper strip (B700 white, Laufenberg & Sohn KG) placed on a heating plate. The silicone paper had dimensions of 60 cm x 10 cm and the adhesive was applied as a film having a thickness of 500 µm and dimensions of 60 cm x 6 cm. Immediately after the application of the adhesive, the silicone paper strip was removed from the heating plate and stored at standard climatic conditions (23°C, 55% relative humidity).

Five rectangular test specimens having dimensions of 2.0 cm x 8.0 cm were cut from a cured adhesive film having a thickness of 500 µm (cured for 14 days at 23°C/50% relative humidity). The tensile strength at break, the elongation at break, and E-Modulus were measured according to DIN 53504 standard at a temperature of 23°C and relative humidity of 50% using a cross head speed of 100 mm/min for the tensile strength and elongation at break and 5 mm/min for the E-Modulus.

The values of tensile strength at break, elongation at break, and E-modulus presented in Table 2 have been obtained as an average of five measurements conducted with the same adhesive composition.

### Peel strength

Roll peel strengths obtained with an adhesive composition was measured using test composite elements composed of a TPO-foil and a plastic substrate (PVC, PP, or ABS), which were bonded to each other using the tested adhesive composition. The TPO-foil had dimensions of 200 mm x 50 mm x 2 mm and the plastic substrate had dimensions of 200 mm x 50 mm x 2 mm. The plastic substrate was cleaned with 2-propanol, dried for at least 10 minutes and stored at temperature of 60°C before being used for the preparation of the test composite elements.

The adhesive composition provided in a sealed tube was preheated in an oven at a temperature of 140°C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper had dimensions of 60 cm x 10 cm and the adhesive was applied as a film having a thickness of 100 µm and dimensions of 60 cm x 6 cm. Immediately after the application of the adhesive, the silicone paper strip was removed from the heating plate and the adhesive film was transferred by reactivation onto the surface of the TPO-foil. The silicone paper was then removed and the TPO-foil with the adhesive film on its surface and the plastic substrate were stored 30 seconds at a temperature of 140°C in an oven.

The plastic substrate and the TPO-foil were then removed from the oven, contacted with each other and pressed together by rolling over ten times back and forth using a roller with a weight of 5 kg. The adhesive bonding area had dimensions of 10 cm x 5 cm. The prepared composite elements were stored with a 3 kg load for 1 hour and two weeks without the load at standard climatic conditions (23°C, relative humidity of 55%).

After the storing period, the roll peel strengths were measured using a Zwick/Roell Z010 material testing apparatus equipped with a roll-peeling device. The roll peel strengths were measured at normal room temperature, at 50°C, and at 90°C. In the measurements, the TPO-foil was peeled off from the surface of the plastic substrate at a peeling angle of 90° and at a constant cross beam speed of 100 ± 0.1 mm/min. The peeling of the tested substrate was continued until a length of approximately 100 mm of the foil was peeled off. The peel resistance was calculated as average peel force per width of the substrate [N/cm] during peeling over a length of approximately 80 mm. The values for roll peel strength presented in Table 2 have been obtained as average of two measurements conducted with composite elements produced with the same adhesive composition.

**Table 2**

| **Composition [pbw]** | **Ref-1** | **Ex-1** | **Ex-2** |
|---|---|---|---|
| Si-APAO | 60.00 | 45.00 | 30.00 |
| Reaction product RP | - | 15.00 | 30.00 |
| Catalyst | 0.01 | 0.01 | 0.01 |
| Tot | 60.00 | 60.01 | 60.01 |

| **Measured properties** | | | |
|---|---|---|---|
| Tensile strenght at break [MPa] | 3.2 | 3.7 | 4.2 |
| Elongation at break [%] | 500 | 320 | 190 |
| E-Modulus [MPa] | 14.1 | 13.0 | 4.8 |
| Peel strength 90° @RT [N/5 cm] | | | |
| TPO-PVC | 15.3 | 87.5 | 68.2 |
| TPO-PP | 48.8 | 48.0 | 25.3 |
| TPO-ABS | 15.2 | 100 | 85.5 |
| Peel strength 90° @50 °C [N/5 cm] | | | |
| TPO-PVC | 8.2 | 37.5 | 32.1 |
| TPO-PP | 21.6 | 60 | 15.1 |
| TPO-ABS | 5.9 | 99.4 | 16.8 |

| | | | |
|---|---|---|---|
| *RT = room temperature | | | |

## Claims

1. A moisture curing hot-melt adhesive composition comprising:
a) At least one at 25°C solid silane-functionalized poly-α-olefin **P** and
b) A reaction product **RP** obtainable by a method comprising steps of:
A) Reacting at least one polyester block copolymer as component b1) with at least one polyisocyanate as component b2) wherein the stoichiometric ratio of isocyanate groups to hydroxyl groups is above 1.0 to obtain a reaction mixture comprising an isocyanate-functional polyurethane pre-polymer,
B) Adding at least one mercaptosilane of the formula (I) as component b3)
HS-R³-Si(X)₍₃₋ₐ₎(R²)ₐ (I)
in which R² is a linear or branched alkyl group having 1 to 10 C atoms, R³ is a linear or branched alkylene group having 1 to 10 C atoms, X is a hydrolyzable radical, and a has a value of 0, 1 or 2, preferably 0,
to the reaction mixture obtained in step A) and carrying out reaction to give the reaction product **RP.**

2. The moisture curing hot-melt adhesive composition according to claim 1, wherein the at least one at 25° solid silane-functionalized poly-α-olefin **P** is present in the adhesive composition in an amount of 25 - 95 wt.-%, preferably 30 - 90 wt.-%, based on the total weight of the adhesive composition.

3. The moisture curing hot-melt adhesive composition according to claim 1 or 2, wherein the reaction product **RP** is present in the adhesive composition in an amount of 5 - 75 wt.-%, preferably 10 - 65 wt.-%, based on the total weight of the adhesive composition.

4. The moisture curing hot-melt adhesive composition according to any of previous claims, wherein the at least one polyester block copolymer as component b1) is a polyester block copolymer of hydroxyl-, carboxyl-, or amino-terminated polymers (block B) and polyesters (block A), wherein the polyester block copolymer has ABA-triblock or AB-diblock structure.

5. The moisture curing hot-melt adhesive composition according to any of previous claims, wherein the at least one polyester block copolymer as component b1) is obtained from ring opening polymerization of one or more lactones and/or lactides in the presence of at least one hydroxyl-, carboxyl-, or amino-terminated polymer, preferably in the presence of at least one hydroxyl-terminated polybutadiene.

6. The moisture curing hot-melt adhesive composition according to claim 5, wherein the at least one hydroxyl-terminated polybutadiene is a liquid hydroxyl-terminated polybutadiene having an average molecular weight (Mₙ) in the range of 500 - 10'000 g/mol, preferably 1'000 - 7'500 g/mol and/or an average hydroxyl (OH) functionality in the range of 1.7 - 5.0, preferably 1.8 - 3.5 and/or an iodine number determined according to DIN 53 241 of 100 - 1'000 g lodine/100 g, preferably 250 - 750 g lodine/100 g.

7. The moisture curing hot-melt adhesive composition according to any of previous claims, wherein the at least one polyester block-copolymer has an average molecular weight (Mₙ) in the range of 1'500 - 50'000 g/mol, preferably 2'500 - 30'000 g/mol and/or a hydroxyl number determined by using method as defined in DIN 53 240-2 standard in the range of 5 - 50 mg KOH/g, preferably 5 - 40 mg KOH/g.

8. The moisture curing hot-melt adhesive composition according to any of previous claims, wherein the at least one polyisocyanate as component b2) is a monomeric diisocyanate having an average molecular weight (Mₙ) of not more than 1'000 g/mol, preferably not more than 500 g/mol.

9. The moisture curing hot-melt adhesive composition according to any of previous claims, wherein the stoichiometric ratio of isocyanate groups to hydroxyl groups in step A) is in the range of 1.3 - 2.5, preferably 1.5-2.2.

10. The moisture curing hot-melt adhesive composition according to any of previous claims, wherein the at least one mercaptosilane of formula (I) is added to the reaction mixture as component b3) in an amount of 2.5 - 35 wt.-%, preferably 5.0 - 30 wt.-%, based on the total weight of components b1) to b3).

11. Use of the moisture curing hot-melt adhesive composition according to any of claims 1-10 as an assembly adhesive, laminating adhesive, or as an adhesive for the building of sandwich elements.

12. A method for adhesively bonding a first substrate to a second substrate, the method comprising steps of:
I) Heating a moisture curing hot-melt adhesive composition according to any of claims 1-10 to provide a melted adhesive composition,
II) Applying the melted adhesive composition to a surface of the first substrate to form an adhesive film,
III) Contacting the adhesive film with a surface of the second substrate, and
IV) Chemically curing the adhesive film with water, particularly with atmospheric moisture.

13. The method according to claim 12, wherein one of the first and the second substrate is composed of a polar material, wherein the other substrate is composed of a non-polar material.

14. Use of the reaction product **RP** as defined in any of claims 1-10 as a chemical crosslinking agent in a moisture curing adhesive composition comprising 25 - 95 wt.-%, preferably 30 - 90 wt.-% of at least one at 25°C solid silane-functionalized poly-α-olefin **P,** based on the total weight of the moisture curing adhesive composition, wherein the reaction product **RP** is preferably present in the moisture curing adhesive composition in an amount of 5 - 75 wt.-%, preferably 10-65 wt.-%, based on the total weight of the moisture curing adhesive composition.

15. The use according to claim 14, wherein the at least one at 25°C solid silane-functionalized poly-α-olefin **P** is a silane-grafted poly-α-olefin, preferably an amorphous silane-grafted poly-α-olefin.

## Patentansprüche

1. Feuchtigkeitshärtende Heißschmelzklebstoffzusammensetzung, umfassend:
a) mindestens ein bei 25 °C festes silanfunktionalisiertes Poly-α-olefin **P** und
b) ein Reaktionsprodukt **RP,** das durch ein Verfahren erhältlich ist, das folgende Schritte umfasst:
A) Umsetzen von mindestens einem Polyester-Blockcopolymer als Komponente b1) mit mindestens einem Polyisocyanat als Komponente b2), wobei das stöchiometrische Verhältnis von Isocyanatgruppen zu Hydroxylgruppen über 1,0 liegt, zum Erhalt einer Reaktionsmischung, die ein isocyanatfunktionelles Polyurethan-Prepolymer umfasst,
B) Zugeben mindestens eines Mercaptosilans der Formel (I) als Komponente b3)
HS-R³-Si(X)₍₃₋ₐ₎(R²)ₐ (I),
in der R² für eine lineare oder verzweigte Alkylgruppe mit 1 bis 10 C-Atomen steht, R³ für eine lineare oder verzweigte Alkylengruppen mit 1 bis 10 C-Atomen steht, X für einen hydrolysierbaren Rest steht und a einen Wert von 0, 1 oder 2, vorzugsweise 0, hat,
zu der in Schritt A) erhaltenen Reaktionsmischung und Umsetzen zu dem Reaktionsprodukt **RP.**

2. Feuchtigkeitshärtende Heißschmelzklebstoffzusammensetzung nach Anspruch 1, wobei das mindestens eine bei 25 °C feste silanfunktionalisierte Poly-α-olefin **P** in der Klebstoffzusammensetzung in einer Menge von 25-95 Gew.-%, vorzugsweise 30-90 Gew.-%, bezogen auf das Gesamtgewicht der Klebstoffzusammensetzung, vorliegt.

3. Feuchtigkeitshärtende Heißschmelzklebstoffzusammensetzung nach Anspruch 1 oder 2, wobei das Reaktionsprodukt **RP** in der Klebstoffzusammensetzung in einer Menge von 5-75 Gew.-%, vorzugsweise 10-65 Gew.-%, bezogen auf das Gesamtgewicht der Klebstoffzusammensetzung, vorliegt.

4. Feuchtigkeitshärtende Heißschmelzklebstoffzusammensetzung nach einem der vorhergehenden Ansprüche, wobei es sich bei dem mindestens einen Polyester-Blockcopolymer als Komponente b1) um ein Polyester-Blockcopolymer von hydroxyl-, carboxyl- oder aminoterminierten Polymeren (Block B) und Polyestern (Block A) handelt, wobei das Polyester-Blockcopolymer eine ABA-Triblock- oder A-B-Diblockstruktur aufweist.

5. Feuchtigkeitshärtende Heißschmelzklebstoffzusammensetzung nach einem der vorhergehenden Ansprüche, wobei das mindestens eine Polyester-Blockcopolymer als Komponente b1) aus der ringöffnenden Polymerisation von einem oder mehreren Lactonen und/oder Lactiden in Gegenwart von mindestens einem hydroxyl-, carboxyl- oder aminoterminierten Polymer, vorzugsweise in Gegenwart von mindestens einem hydroxylterminierten Polybutadien, erhalten wird.

6. Feuchtigkeitshärtende Heißschmelzklebstoffzusammensetzung nach Anspruch 5, wobei es sich bei dem mindestens einen hydroxylterminierten Polybutadien um ein flüssiges hydroxylterminiertes Polybutadien mit einem mittleren Molekulargewicht (Mₙ) im Bereich von 50 bis 10.000 g/mol, vorzugsweise 1000-7500 g/mol, und/oder einer mittleren Hydroxyl(OH)-Funktionalität im Bereich von 1,7-5,0, vorzugsweise 1,8-3,5, und/oder einer gemäß DIN 53 241 bestimmten Iodzahl von 100-1000 g Iod/100 g, vorzugsweise 250-750 g Iod/100 g, handelt.

7. Feuchtigkeitshärtende Heißschmelzklebstoffzusammensetzung nach einem der vorhergehenden Ansprüche, wobei das mindestens eine Polyester-Blockcopolymer ein mittleres Molekulargewicht (Mₙ) im Bereich von 1500-50.000 g/mol, vorzugsweise 2500-30.000 g/mol, und/oder eine nach der in DIN-Norm 53 240-2 definierten Methode bestimmte Hydroxylzahl im Bereich von 5-50 mg KOH/g, vorzugsweise 5-40 mg KOH/g, aufweist.

8. Feuchtigkeitshärtende Heißschmelzklebstoffzusammensetzung nach einem der vorhergehenden Ansprüche, wobei es sich bei dem mindestens einen Polyisocyanat als Komponente b2) um ein monomeres Diisocyanat mit einem mittleren Molekulargewicht (Mₙ) von nicht mehr als 1000 g/mol, vorzugsweise nicht mehr als 500 g/mol, handelt.

9. Feuchtigkeitshärtende Heißschmelzklebstoffzusammensetzung nach einem der vorhergehenden Ansprüche, wobei das stöchiometrische Verhältnis von Isocyanatgruppen zu Hydroxylgruppen in Schritt A) im Bereich von 1,3-2,5, vorzugsweise 1,5-2,2, liegt.

10. Feuchtigkeitshärtende Heißschmelzklebstoffzusammensetzung nach einem der vorhergehenden Ansprüche, wobei das mindestens eine Mercaptosilan der Formel (I) als Komponente b3) in einer Menge von 2,5-35 Gew.-%, vorzugsweise 5,0-30 Gew.-%, bezogen auf das Gesamtgewicht der Komponenten b1) bis b3), zur Reaktionsmischung gegeben wird.

11. Verwendung der feuchtigkeitshärtenden Heißschmelzklebstoffzusammensetzung nach einem der Ansprüche 1-10 als Montageklebstoff, Kaschierklebstoff oder als Klebstoff zum Aufbau von Sandwichelementen.

12. Verfahren zur Verklebung eines ersten Substrats mit einem zweiten Substrat, wobei das Verfahren folgende Schritte umfasst:
I) Erhitzen einer feuchtigkeitshärtenden Heißschmelzklebstoffzusammensetzung nach einem der Ansprüche 1-10 zur Bereitstellung einer geschmolzenen Klebstoffzusammensetzung,
II) Aufbringen der geschmolzenen Klebstoffzusammensetzung auf eine Oberfläche des ersten Substrats zur Bildung eines Klebstofffilms,
III) Kontaktieren des Klebstofffilms mit einer Oberfläche des zweiten Substrats und
IV) chemisches Härten des Klebstofffilms mit Wasser, insbesondere mit Luftfeuchtigkeit.

13. Verfahren nach Anspruch 12, wobei das erste Substrat oder das zweite Substrat aus einem polaren Material bestehen und das andere Substrat aus einem unpolaren Material besteht.

14. Verwendung des Reaktionsprodukt **RP** gemäß einem der Ansprüche 1-10 als chemisches Vernetzungsmittel in einer feuchtigkeitshärtenden Klebstoffzusammensetzung, die 25-95 Gew.-%, vorzugsweise 30 bis 90 Gew.-%, mindestens eines bei 25 °C festen silanfunktionalisierten Poly-α-olefins **P,** bezogen auf das Gesamtgewicht der feuchtigkeitshärtenden Klebstoffzusammensetzung, umfasst, wobei das Reaktionsprodukt RP in der feuchtigkeitshärtenden Klebstoffzusammensetzung vorzugsweise in einer Menge von 5-75 Gew.-%, vorzugsweise 10-65 Gew.-%, bezogen auf das Gesamtgewicht der feuchtigkeitshärtenden Klebstoffzusammensetzung, vorliegt.

15. Verwendung nach Anspruch 14, wobei es sich bei dem bei 25 °C festen silanfunktionalisierten Poly-α-olefin **P** um ein silangepfropftes Poly-α-olefin, vorzugsweise ein amorphes silangepfropftes Poly-α-olefin, handelt.

## Revendications

1. Composition d'adhésif thermofusible durcissant à l'humidité comprenant :
a) au moins une poly-α-oléfine **P** solide à 25 °C fonctionnalisée par un silane et
b) un produit de réaction **RP** qui peut être obtenu par le procédé comprenant les étapes de :
A) mise en réaction d'au moins un copolymère à blocs de polyester en tant que composant b1) avec au moins un polyisocyanate en tant que composant b2), le rapport stoechiométrique de groupes isocyanate sur groupes hydroxyle étant supérieur à 1,0 pour obtenir un mélange de réaction comprenant un pré-polymère de polyuréthane fonctionnalisé par isocyanate,
B) ajout d'au moins un mercaptosilane de la formule (I) en tant que composant b3)
**HS-R³-Si(X)₍₃₋ₐ₎(R²)ₐ** **(I)**
dans laquelle R² est un groupe alkyle linéaire ou ramifié possédant 1 à 10 atomes de C, R³ est un groupe alkylène linéaire ou ramifié possédant 1 à 10 atomes de C, X est un radical hydrolysable, et a possède une valeur de 0, 1 ou 2, préférablement 0,
au mélange réactionnel obtenu dans l'étape A) et mise en œuvre de la réaction pour donner le produit de réaction **RP.**

2. Composition d'adhésif thermofusible durcissant à l'humidité selon la revendication 1, l'au moins une poly-α-oléfine **P** solide à 25 °C fonctionnalisée par un silane étant présente dans la composition d'adhésif en une quantité de 25 à 95 % en poids, préférablement de 30 à 90 % en poids, sur la base du poids total de la composition d'adhésif.

3. Composition d'adhésif thermofusible durcissant à l'humidité selon la revendication 1 ou 2, le produit de réaction **RP** étant présent dans la composition d'adhésif en une quantité de 5 à 75 % en poids, préférablement de 10 à 65 % en poids, sur la base du poids total de la composition d'adhésif.

4. Composition d'adhésif thermofusible durcissant à l'humidité selon l'une quelconque des revendications précédentes, l'au moins un copolymère à blocs de polyester en tant que composant b1) étant un copolymère à blocs de polyester de polymères (bloc B) et de polyesters (bloc A) terminés par hydroxyle, terminés par carboxyle ou terminés par amino, le copolymère à blocs de polyester possédant une structure tribloc ABA ou dibloc AB.

5. Composition d'adhésif thermofusible durcissant à l'humidité selon l'une quelconque des revendications précédentes, l'au moins un copolymère à blocs de polyester en tant que composant b1) étant obtenu par polymérisation par ouverture de cycle d'une ou plusieurs lactones et/ou d'un ou plusieurs lactides en la présence d'au moins un polymère terminé par hydroxyle, terminé par carboxyle ou terminé par amino, préférablement en la présence d'au moins un polybutadiène terminé par hydroxyle.

6. Composition d'adhésif thermofusible durcissant à l'humidité selon la revendication 5, l'au moins un polybutadiène terminé par hydroxyle étant un polybutadiène terminé par hydroxyle liquide possédant un poids moléculaire moyen (Mₙ) dans la plage de 500 à 10 000 g/mole, préférablement de 1 000 à 7 500 g/mole et/ou une fonctionnalité d'hydroxyle (OH) moyenne dans la plage de 1,7 à 5,0, préférablement de 1,8 à 3,5 et/ou un indice d'iode déterminé selon la norme DIN 53 241 de 100 à 1 000 g d'iode/100 g, préférablement de 250 à 750 g d'iode/100 g.

7. Composition d'adhésif thermofusible durcissant à l'humidité selon l'une quelconque des revendications précédentes, l'au moins un copolymère à blocs de polyester possédant un poids moléculaire moyen (Mₙ) dans la plage de 1 500 à 50 000 g/mole, préférablement de 2 500 à 30 000 g/mole et/ou un indice d'hydroxyle déterminé en utilisant le procédé tel que défini dans la norme DIN 53 240-2 dans la plage de 5 à 50 mg de KOH/g, préférablement de 5 à 40 mg de KOH/g.

8. Composition d'adhésif thermofusible durcissant à l'humidité selon l'une quelconque des revendications précédentes, l'au moins un polyisocyanate en tant que composant b2) étant un diisocyanate monomérique possédant un poids moléculaire moyen (Mₙ) non supérieur à 1 000 g/mole, préférablement non supérieur à 500 g/mole.

9. Composition d'adhésif thermofusible durcissant à l'humidité selon l'une quelconque des revendications précédentes, le rapport stoechiométrique de groupes isocyanate sur groupes hydroxyle dans l'étape A) étant dans la plage de 1,3 à 2,5, préférablement 1,5 à 2,2.

10. Composition d'adhésif thermofusible durcissant à l'humidité selon l'une quelconque des revendications précédentes, l'au moins un mercaptosilane de formule (I) étant ajouté au mélange de réaction en tant que composant b3) en une quantité de 2,5 à 35 % en poids, préférablement de 5,0 à 30 % en poids, sur la base du poids total de composants b1) à b3).

11. Utilisation de la composition d'adhésif thermofusible durcissant à l'humidité selon l'une quelconque des revendications 1 à 10 en tant qu'adhésif d'assemblage, adhésif de stratification ou en tant qu'adhésif pour la construction d'éléments en sandwiches.

12. Procédé pour la liaison de manière adhésive d'un premier substrat à un deuxième substrat, le procédé comprenant les étapes de :
I) chauffage d'une composition d'adhésif thermofusible durcissant à l'humidité selon l'une quelconque des revendications 1 à 10 pour fournir une composition d'adhésif fondue,
II) application de la composition d'adhésif fondue à une surface du premier substrat pour former un film d'adhésif,
III) mise en contact du film d'adhésif avec une surface du deuxième substrat, et
IV) durcissement de manière chimique du film d'adhésif avec de l'eau, particulièrement avec de l'humidité atmosphérique.

13. Procédé selon la revendication 12, l'un parmi le premier et le deuxième substrat étant composé d'un matériau polaire, l'autre substrat étant composé d'un matériau non polaire.

14. Utilisation du produit de réaction **RP** tel que défini dans l'une quelconque des revendications 1 à 10 en tant qu'agent de réticulation chimique dans une composition d'adhésif durcissant à l'humidité comprenant 25 à 95 % en poids, préférablement 30 à 90 % en poids d'au moins une poly-α-oléfine **P** solide à 25 °C fonctionnalisée par un silane, sur la base du poids total de la composition d'adhésif durcissant à l'humidité, le produit de réaction **RP** étant préférablement présent dans la composition d'adhésif durcissant à l'humidité en une quantité de 5 à 75 % en poids, préférablement de 10 à 65 % en poids, sur la base du poids total de la composition d'adhésif durcissant à l'humidité.

15. Utilisation selon la revendication 14, l'au moins une poly-α-oléfine **P** solide à 25 °C fonctionnalisée par un silane étant une poly-α-oléfine greffée avec un silane, préférablement une poly-α-oléfine greffée avec un silane amorphe.
